# FASCICULE DE BREVET EUROPEEN

(11) **EP 1 873 053 B1**
(45) Date de publication et mention de la délivrance du brevet: **29.10.2008**
(21) Numéro de dépôt: 07301119.9
(22) Date de dépôt: 18.06.2007
(51) Int. Cl.: B63B 25/16

(54) **Panneau préfabriqué avec film protecteur**
Fertigplatte mit Schutzfilm
Prefabricated panel with protective film

(30) Priorité: 30.06.2006 FR 0605963
(43) Date de publication de la demande: 02.01.2008
(73) Titulaire: Gaz Transport et Technigaz, 78470 Saint-Rémy-Lès-Chevreuse (FR)
(72) Inventeur: Dhellemmes, Jacques, 78000 Versailles (FR); Lefebvre, Nicolas, 78000 Versailles (FR); Preato-Pavret de la Rochefordiere, Sophie, 64122 Urrugne (FR); Huon de Kermadec, Christophe, 78000 Versailles (FR)
(74) Mandataire: Laget, Jean-Loup

(56) Documents cités:
- EP-A1- 0 248 721
- DE-A1- 19 934 620
- FR-A1- 2 724 623

## Description

La présente invention se rapporte à la réalisation de cuves étanches et thermiquement isolées intégrées dans une structure porteuse, notamment la coque d'un navire destiné au transport par mer des gaz liquéfiés et, en particulier, au transport des gaz naturels liquéfiés à forte teneur en méthane. Plus précisément, la présente invention se rapporte à un panneau pour la fabrication d'une telle cuve et à un procédé de fabrication utilisant ce panneau.

Dans la demande de brevet français n° 2 724 623, on a proposé une cuve étanche et thermiquement isolée intégrée dans une structure porteuse, notamment de navire. La paroi de la cuve présente, successivement depuis l'intérieur de la cuve vers la structure porteuse, une barrière d'étanchéité primaire au contact avec le produit contenu dans la cuve, une barrière thermiquement isolante primaire, une barrière d'étanchéité secondaire et une barrière thermiquement isolante secondaire. La barrière d'étanchéité primaire est constituée par des virures métalliques à bords relevés vers l'intérieur de la cuve, lesdites virures étant réalisées en tôle mince à faible coefficient de dilatation et étant soudées bord à bord, par leurs bords relevés, sur les deux faces d'un support de soudure, qui est retenu mécaniquement sur la barrière thermiquement isolante primaire et constitue un joint glissant. La barrière thermiquement isolante primaire, la barrière d'étanchéité secondaire et la barrière thermiquement isolante secondaire sont essentiellement constituées par un ensemble de panneaux préfabriqués fixés sur la structure porteuse, chaque panneau étant formé, en premier lieu, d'une première plaque rigide portant une couche d'isolant thermique et constituant avec elle un élément de barrière thermiquement isolante secondaire, en deuxième lieu, d'une nappe souple ou rigide adhérant sensiblement sur toute la surface de la couche d'isolant thermique de l'élément de barrière thermiquement isolante secondaire précité, ladite nappe étant constituée d'un matériau composite dont les deux couches externes sont des tissus de fibres de verre et dont la couche intermédiaire est une feuille d'aluminium mince déformable d'environ 0,1 mm d'épaisseur, ladite feuille formant un élément de barrière d'étanchéité secondaire, en troisième lieu, d'une deuxième couche d'isolant thermique, qui recouvre partiellement la nappe précitée et qui y adhère et, en quatrième lieu, d'une deuxième plaque rigide recouvrant la deuxième couche d'isolant thermique et constituant avec elle un élément de barrière thermiquement isolante primaire. On connaît également des cuves comprenant des panneaux préfabriqués de structure similaire, dans lesquelles la barrière d'étanchéité primaire est constituée de virures d'aluminium ou d'acier inoxydable ondulées.

Les zones de jonction de deux panneaux adjacents sont comblées, de façon à assurer la continuité de la barrière d'étanchéité secondaire. Plus précisément, pour assurer la continuité de l'étanchéité de la barrière d'étanchéité secondaire, il est prévu qu'au droit des joints entre panneaux, les rebords périphériques adjacents de deux panneaux adjacents sont recouverts d'une bande de nappe souple comportant au moins une fine feuille métallique continue, ladite bande adhérant sur les deux rebords périphériques adjacents et assurant, par sa feuille métallique, la continuité de l'étanchéité.

La qualité de l'étanchéité de la barrière d'étanchéité secondaire dépend de plusieurs facteurs, et notamment de la qualité du collage de la bande de nappe souple sur les rebords périphériques des panneaux. Pour garantir une qualité de collage suffisante, il est connu de procéder, lors du collage de la bande de nappe souple, à un test de bavure consistant à :
- fixer les panneaux sur la structure porteuse de la cuve,
- placer du ruban adhésif sur les panneaux installés, de manière adjacente à la zone à coller,
- coller la bande de nappe souple avec un adhésif en quantité telle qu'une bavure se forme à côté de la bande souple et recouvre partiellement le ruban adhésif,
- après polymérisation de l'adhésif, retirer le ruban adhésif,
- examiner la bavure après le retrait du ruban adhésif et valider le collage en fonction de cet examen.

Ce procédé de fabrication et de test présente plusieurs inconvénients. Entre la préfabrication des panneaux et leur fixation dans la cuve, l'état de surface de la nappe souple ou rigide qui forme un élément de barrière d'étanchéité secondaire peut se dégrader, par exemple au cours du transport, du stockage ou de la fixation des panneaux, en raison du dépôt de pollution sur la nappe souple ou des effets de conditions extérieures, par exemple la température ou un rayonnement ultraviolet. Une surface abîmée peut donner lieu à un collage de mauvaise qualité. Avant de coller la bande de nappe souple, il est nécessaire de placer le ruban adhésif sur tous les panneaux installés, ce qui nécessite un temps important. De plus, le dos du ruban adhésif est généralement recouvert d'un antiadhésif qui peut migrer et largement perturber le collage de la bande de nappe souple.

L'invention a pour but de fournir un procédé de fabrication de cuve qui ne présente pas au moins certains des inconvénients précités de l'art antérieur, et un panneau pour la mise en oeuvre du procédé.

Pour cela, l'invention fournit un panneau comportant successivement une première plaque rigide formant le fond du panneau, une première couche d'isolant thermique portée par ladite plaque de fond, une nappe étanche recouvrant ladite première couche d'isolant thermique, une deuxième couche d'isolant thermique qui recouvre partiellement ladite nappe étanche et une deuxième plaque rigide recouvrant ladite deuxième couche d'isolant thermique, caractérisé par le fait qu'il comprend un film qui recouvre au moins une partie de ladite nappe étanche qui n'est pas recouverte par ladite deuxième couche d'isolant thermique, ledit film comprenant au moins une portion de protection et au moins une portion de bavure adjacente à ladite portion de protection, ladite portion de protection et ladite portion de bavure étant aptes à être séparées de ladite nappe étanche indépendamment l'une de l'autre.

Comme la portion de protection du film recouvre une zone à coller de la nappe étanche, cette zone à coller est protégée et son état de surface ne se dégrade pas ou pratiquement pas. La qualité du collage est donc améliorée. De plus, comme la portion de bavure du film est adjacente à la zone à coller, il n'est pas nécessaire de placer du ruban adhésif sur les panneaux après leur installation. Au contraire, il suffit de retirer la portion de bavure pour réaliser le test de bavure. Le temps de fabrication sur site est donc réduit. De plus, l'absence de ruban adhésif permet d'éviter la présence de produit antiadhésif dans la cuve et donc d'augmenter la sécurité du collage.

De préférence, ledit film recouvre la totalité de ladite nappe étanche qui n'est pas recouverte par ladite deuxième couche d'isolant thermique.

Avantageusement, ladite portion de protection est adjacente à un bord dudit panneau.

Selon un mode de réalisation, le panneau présente, vu en plan, une forme rectangulaire, ledit film comprenant quatre portions de protection adjacentes aux quatre bords de ladite nappe étanche et quatre portions de bavures adjacentes respectivement aux quatre portions de protection.

Grâce à ces caractéristiques, il est possible de retirer une des quatre portions de protection juste avant de coller la zone à coller qu'elle recouvre, sans retirer les autres. Ainsi, les autres zones à coller restent protégées tant qu'elles sont recouvertes.

Selon un mode de réalisation particulier, ladite portion de protection et ladite portion de bavure sont constituées d'une unique feuille présentant une prédécoupe.

Dans ce cas, le panneau peut être fabriqué simplement en posant l'unique feuille prédécoupée pour réaliser en une étape la portion de protection et la portion de bavure. De plus, la prédécoupe est réalisée lors de la préfabrication du panneau ou de la nappe étanche et peut donc être positionnée de façon précise.

Avantageusement, le panneau comprend une couche de renfort posée sur ladite portion de bavure.

Grâce à ces caractéristiques, on peut choisir, pour l'unique feuille, un matériau approprié à la protection de la nappe étanche, sans devoir tenir compte de contraintes de résistance liées au test de bavure.

Selon un mode de réalisation particulier, ladite portion de protection et ladite portion de bavure sont constituées respectivement de deux feuilles différentes présentant un matériau et/ou une épaisseur différents.

Ainsi, on peut choisir pour la portion de protection et pour la portion de bavure une feuille de propriétés adaptées respectivement à la protection de la nappe étanche et au test de bavure. Les deux feuilles peuvent être disposées simultanément ou à la même phase de préfabrication.

De préférence, ladite nappe étanche comprend une feuille métallique souple et, de chaque côté de ladite feuille métallique, une couche comportant un tissu de fibres de verre.

Avantageusement, ledit film présente une portion de test apte à être séparée de ladite nappe étanche indépendamment de ladite portion de protection et de ladite portion de bavure.

Grâce à ces caractéristiques, il est possible de tester sur site l'aptitude au collage de la nappe étanche solidaire du panneau, en un temps réduit, et ce pour une zone étendue de la nappe étanche. Les tests connus de l'art antérieur, comme la mesure de l'énergie de surface ou la mouillabilité, nécessitent un temps important incompatible avec un test sur site, et ne caractérisent jamais que les points mesurés.

L'invention fournit également un procédé de fabrication d'une cuve étanche et thermiquement isolée, caractérisé par le fait qu'il comprend les étapes consistant à :
- fixer des panneaux selon l'invention ci-dessus sur la structure porteuse de la cuve,
- retirer des portions de protection de panneaux adjacents,
- coller une bande de nappe étanche sur les zones découvertes par les portions de protection retirées avec un adhésif, de façon à assurer la continuité de la barrière d'étanchéité secondaire,
- après polymérisation de l'adhésif, retirer des portions de bavure adjacentes auxdites zones découvertes,
- examiner la bavure d'adhésif formée et valider le collage de la bande de nappe étanche en fonction de cet examen.

De préférence, ladite bande de nappe étanche comprend une feuille métallique souple et, de chaque côté de ladite feuille métallique, une couche comportant un tissu de fibres de verre.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
- La figure 1 est une vue en perspective de deux panneaux préfabriqués adjacents, selon un mode de réalisation de l'invention.
- La figure 2 représente un détail des panneaux de la figure 1, et montre comment le film peut être retiré des panneaux.
- La figure 3 représente un détail des panneaux de la figure 1, pendant le test de bavure.

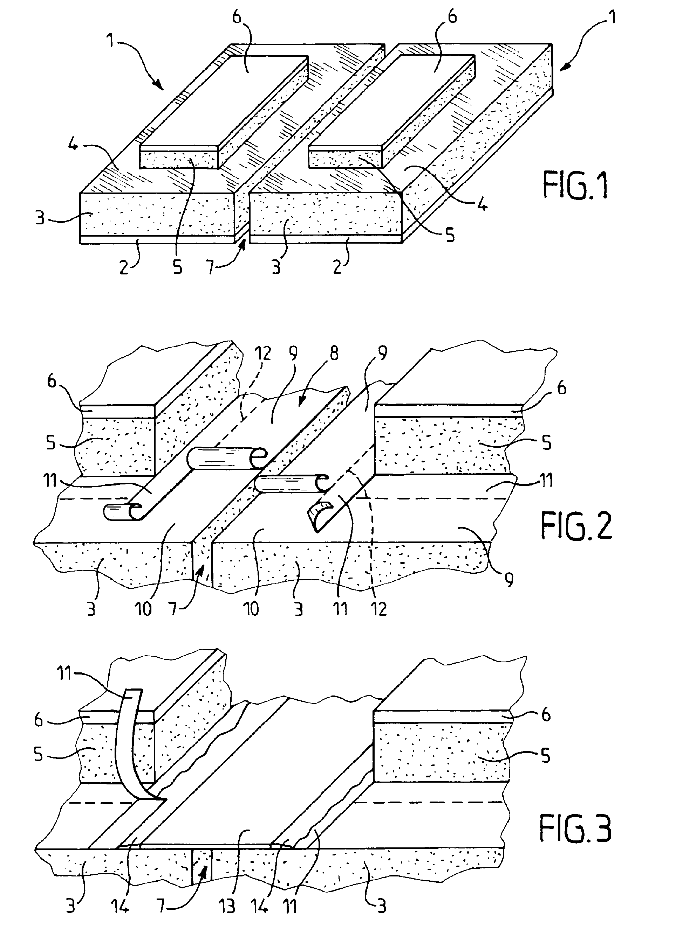

La figure 1 représente deux panneaux 1 préfabriqués, fixés de manière adjacente sur la structure porteuse (non représentée) d'une cuve pour le transport par mer de gaz naturel liquéfié.

Chaque panneau 1 comprend une plaque de fond 2 rigide, par exemple en bois contreplaqué, et une première couche d'isolant thermique 3, par exemple en mousse polyuréthane renforcée par des fibres de verre, qui recouvre la plaque de fond 2. La plaque de fond 2 et la première couche d'isolant thermique 3 forment ensemble un élément de barrière thermiquement isolante secondaire. Une nappe étanche 4 adhère sur la première couche d'isolant thermique 3, du côté opposé à la plaque de fond 2. La nappe étanche 4 peut être rigide ou souple et comprend trois couches, à savoir une feuille d'aluminium d'une épaisseur d'environ 0,1 mm, entourée de tissus de fibres de verre, et constitue un élément de barrière d'étanchéité secondaire. Une deuxième couche d'isolant thermique 5, par exemple en mousse polyuréthane renforcée par des fibres de verre, est collée sur la nappe étanche 4, et une plaque de dessus 6, par exemple en bois contreplaqué, recouvre la deuxième couche d'isolant thermique 5. La deuxième couche d'isolant thermique 5 et la plaque de dessus 6 forment ensemble un élément de barrière thermiquement isolante primaire.

Vues en plan, la plaque de fond 2, la première couche d'isolant thermique 3 et la nappe étanche 4 ont la forme d'un premier rectangle. La deuxième couche d'isolant thermique 5 et la plaque de dessus 6 ont la forme d'un deuxième rectangle de même centre que le premier, mais de plus petites dimensions. Ainsi, la nappe étanche 4 présente un rebord périphérique qui n'est pas recouvert par la deuxième couche d'isolant thermique 5.

Le rebord périphérique de la nappe étanche 4 est recouvert par un film 8, comme on peut le voir sur la figure 2. Dans le mode de réalisation représenté, le film 8 recouvre entièrement le rebord périphérique de la nappe étanche 4. Dans un autre mode de réalisation, le film 8 ne recouvre pas une zone de la nappe étanche 4 adjacente à la deuxième couche d'isolant thermique 5, de faible largeur. Le film 8 comprend deux portions de protection 9 qui s'étendent chacune le long d'un long côté de la nappe étanche 4, et deux portions de bavure 11 qui s'étendent chacune de manière adjacente à ces portions de protection 9. Le film 8 comprend également deux autres portions de protection 9 qui s'étendent chacune le long d'un petit côté de la nappe étanche 4, entre les deux portions de bavure 11 précitées, et deux autres portions de bavure 11 qui s'étendent chacune de manière adjacente à ces autres portions de protection 9. Sur la figure 2, on a représenté des portions de protection 9 et des portions de bavure 11 partiellement retirées de la nappe étanche 4.

Dans le mode de réalisation représenté, le film 8 est constitué par une unique feuille, par exemple une feuille de matériau polyéthylène ou de type carton, collée sur la nappe étanche 4, et qui présente des prédécoupes 12 qui séparent les différentes portions de protection 9 et portions de bavure 11 les unes des autres. Dans une variante, une couche de renfort, par exemple un tissu de fibres de verre, est prévue sur les portions de bavure 11. Dans un autre mode de réalisation, les portions de protection 9 et les portions de bavure 11 du film 8 sont réalisées en matériau différent et/ou présentent une épaisseur différente.

L'adhésif du film 8 qui le maintient sur la nappe étanche 4 est par exemple un adhésif du type acrylique ou caoutchouc. Ces types d'adhésif présentent l'avantage de ne pas laisser de trace sur la nappe étanche 4 après dépose du film, ou au moins de ne pas laisser de trace nuisant au collage de la bande de nappe étanche 13, décrit ci-dessous. De plus, ce type d'adhésif permet un stockage des panneaux 1 de relativement longue durée, par exemple plusieurs mois, sans que les propriétés de l'adhésif ne se dégradent, par exemple en raison de l'action d'un rayonnement ultraviolet, de la température ou de l'humidité.

En fixant une pluralité de panneaux 1 préfabriqués rectangulaires, et éventuellement des panneaux de structure similaire et de forme trapézoïdale ou autre, sur la structure porteuse d'une cuve, on constitue en une étape l'essentiel de la barrière thermiquement isolante secondaire, de la barrière d'étanchéité secondaire et de la barrière thermiquement isolante primaire de la cuve. Ensuite, on établit la continuité de ces barrières entre les panneaux 1 et on place la barrière d'étanchéité primaire. La fixation des panneaux 1 sur la structure porteuse, l'établissement de la continuité des barrières thermiquement isolantes secondaire et primaire et le placement de la barrière d'étanchéité primaire peuvent se faire selon des techniques connues de l'homme du métier, par exemple comme décrit dans les documents FR-A-2 724 623 précité et FR-A-2 781 557. L'établissement de la continuité de la barrière d'étanchéité secondaire peut être réalisé selon la technique décrite ci-dessous.

Après avoir fixé les panneaux 1 sur la structure porteuse et établi la continuité de la barrière thermiquement isolante secondaire, on retire les portions de protection 9 qui recouvrent deux bords adjacents de deux panneaux 1 adjacents, entre lesquels il y a un espace 7. Ainsi, on découvre deux zones à coller 10 des panneaux 1. A ce stade, les autres portions de protection 9 des panneaux 1 ne sont pas retirées afin de protéger les zones à coller qu'elles recouvrent.

Ensuite, on enduit d'adhésif les zones à coller 10 découvertes, et on pose une bande de nappe étanche 13, souple et présentant la même structure en trois couches que la nappe étanche 4, de sorte que la bande 13 adhère aux deux zones à coller 10 des deux panneaux 1 adjacents en recouvrant l'espace 7, comme représenté sur la figure 3. Des bavures d'adhésif 14 se forment alors de part et d'autre de la bande 13 et recouvrent partiellement les portions de bavure 11 qui étaient adjacentes aux portions de protection 9 retirées.

Afin de vérifier la qualité du collage de la bande 13, on effectue alors un test de bavure, c'est-à-dire qu'après polymérisation de l'adhésif, on retire les portions de bavure 11, comme représenté sur la partie gauche de la figure 3, et on examine le reste de la bavure d'adhésif 14.

Dans un mode de réalisation non représenté, le film 8 présente une portion de test apte à être séparée de la nappe étanche 4 indépendamment des portions de protection 9 et des portions de bavure 11. Cette portion de test est par exemple constituée par une languette délimitée par une prédécoupe rectangulaire sur une portion de bavure 11. On peut alors réaliser un test de pelage sur site, par exemple juste avant de fixer le panneau 1 sur la structure porteuse, consistant à tirer en pelage à 180° sur la languette afin de la retirer, et mesurer l'effort nécessaire avec un peson. Si l'effort nécessaire n'est pas dans une plage donnée, on en déduit que la surface de la nappe étanche 4 a été endommagée ou polluée et est impropre au collage. On peut alors nettoyer la nappe étanche 4 avant le collage ou rebuter le panneau 1.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Panneau (1) comportant successivement une première plaque rigide (2) formant le fond du panneau, une première couche d'isolant thermique (3) portée par ladite plaque de fond, une nappe étanche (4) recouvrant ladite première couche d'isolant thermique, une deuxième couche d'isolant thermique (5) qui recouvre partiellement ladite nappe étanche et une deuxième plaque rigide (6) recouvrant ladite deuxième couche d'isolant thermique, **caractérisé par le fait qu'**il comprend un film (8) qui recouvre au moins une partie de ladite nappe étanche qui n'est pas recouverte par ladite deuxième couche d'isolant thermique, ledit film comprenant au moins une portion de protection (9) et au moins une portion de bavure (11) adjacente à ladite portion de protection, ladite portion de protection et ladite portion de bavure étant aptes à être séparées de ladite nappe étanche indépendamment l'une de l'autre.

2. Panneau selon la revendication 1, **caractérisé par le fait que** ledit film recouvre la totalité de ladite nappe étanche qui n'est pas recouverte par ladite deuxième couche d'isolant thermique.

3. Panneau selon l'une des revendications 1 à 2, **caractérisé par le fait que** ladite portion de protection est adjacente à un bord dudit panneau.

4. Panneau selon la revendication 3, **caractérisé par le fait qu'**il présente, vu en plan, une forme rectangulaire, ledit film comprenant quatre portions de protection adjacentes aux quatre bords de ladite nappe étanche et quatre portions de bavures adjacentes respectivement aux quatre portions de protection.

5. Panneau selon l'une des revendications 1 à 4, **caractérisé par le fait que** ladite portion de protection et ladite portion de bavure sont constituées d'une unique feuille présentant une prédécoupe (12).

6. Panneau selon la revendication 5, **caractérisé par le fait qu'**il comprend une couche de renfort posée sur ladite portion de bavure.

7. Panneau selon l'une des revendications 1 à 4, **caractérisé par le fait que** ladite portion de protection et ladite portion de bavure sont constituées respectivement de deux feuilles différentes présentant un matériau et/ou une épaisseur différents.

8. Panneau selon l'une des revendications 1 à 7, **caractérisé par le fait que** ladite nappe étanche comprend une feuille métallique souple et, de chaque côté de ladite feuille métallique, une couche comportant un tissu de fibres de verre.

9. Panneau selon l'une des revendications 1 à 8, **caractérisé par le fait que** ledit film présente une portion de test apte à être séparée de ladite nappe étanche indépendamment de ladite portion de protection et de ladite portion de bavure.

10. Procédé de fabrication d'une cuve étanche et thermiquement isolée, **caractérisé par le fait qu'**il comprend les étapes consistant à :
- fixer des panneaux (1) selon l'une des revendications 1 à 9 sur la structure porteuse de la cuve,
- retirer des portions de protection (9) de panneaux adjacents,
- coller une bande de nappe étanche (13) sur les zones découvertes (10) par les portions de protection retirées avec un adhésif, de façon à assurer la continuité de la barrière d'étanchéité secondaire,
- après polymérisation de l'adhésif, retirer des portions de bavure (11) adjacentes auxdites zones découvertes,
- examiner la bavure d'adhésif (14) formée et valider le collage de la bande de nappe étanche en fonction de cet examen.

11. Procédé de fabrication selon la revendication 10, **caractérisé par le fait que** ladite bande de nappe étanche comprend une feuille métallique souple et, de chaque côté de ladite feuille métallique, une couche comportant un tissu de fibres de verre.

## Claims

1. Panel (1) comprising, in succession, a first rigid board (2) forming the back of the panel, a first thermally insulating layer (3) borne by the said backboard, an impervious covering (4) covering the said first thermally insulating layer, a second thermally insulating layer (5) which partially covers the said impervious covering and a second rigid board (6) covering the said second thermally insulating layer, **characterized in that** it comprises a film (8) which covers at least part of the said impervious covering which is not covered by the said second thermally insulating layer, the said film comprising at least one protective portion (9) and at least one spew portion (11) adjacent to the said protective portion, the said protective portion and the said spew portion being able to be detached from the said impervious covering independently of one another.

2. Panel according to Claim 1, **characterized in that** the said film covers all of the said impervious covering which is not covered by the said second thermally insulating layer.

3. Panel according to one of Claims 1 and 2, **characterized in that** the said protective portion is adjacent to one edge of the said panel.

4. Panel according to Claim 3, **characterized in that**, in plan view, it has a rectangular shape, the said film having four protective portions adjacent to the four edges of the said impervious covering and four spew portions, one adjacent to each of the four protective portions.

5. Panel according to one of Claims 1 to 4, **characterized in that** the said protective portion and the said spew portion consist of a single sheet which has a precut (12).

6. Panel according to Claim 5, **characterized in that** it comprises a reinforcing layer laid on the said spew portion.

7. Panel according to one of Claims 1 to 4, **characterized in that** the said protective portion and the said spew portion each consist of two different sheets of different materials and/or different thicknesses.

8. Panel according to one of Claims 1 to 7, **characterized in that** the said impervious covering comprises a flexible metal sheet and, on each side of the said metal sheet, a layer comprising a fibreglass fabric.

9. Panel according to one of Claims 1 to 8, **characterized in that** the said film has a test portion that can be detached from the said impervious covering independently of the said protective portion and of the said spew portion.

10. Method of manufacturing a sealed and thermally insulated tank, **characterized in that** it comprises the steps involving:
- fixing panels (1) according to one of Claims 1 to 9 to the bearing structure of the tank,
- removing the protective portions (9) from adjacent panels,
- sticking a strip of impervious covering (13) onto the regions (10) uncovered by the protective portions removed using an adhesive so as to ensure the continuity of the secondary sealing barrier,
- once the adhesive is cured, removing the spew portions (11) adjacent to the said uncovered regions,
- examining the adhesive spew (14) formed and validating the bonding of the strip of impervious covering on the strength of this examination.

11. Manufacturing method according to Claim 10, **characterized in that** the said strip of impervious covering comprises a flexible metal sheet and, on each side of the said metal sheet, a layer comprising a fibreglass fabric.

## Patentansprüche

1. Paneel (1), das aufeinanderfolgend eine erste starre Platte (2), die den Boden des Paneels bildet, eine erste Wärmedämmschicht (3), die von der Bodenplatte getragen wird, eine Dichtungslage (4), welche die erste Wärmedämmschicht bedeckt, eine zweite Wärmedämmschicht (5), welche die Dichtungslage teilweise bedeckt und eine zweite starre Platte (6), welche die zweite Wärmedämmschicht bedeckt, aufweist, **dadurch gekennzeichnet, dass** sie einen Film (8) umfasst, der wenigstens einen Teil der Dichtungslage bedeckt, der nicht von der zweiten Wärmedämmschicht bedeckt ist, wobei der Film wenigstens einen Schutzabschnitt (9) und wenigstens einen Gratabschnitt (11), der an den Schutzabschnitt angrenzt, aufweist, wobei der Schutzabschnitt und der Gratabschnitt unabhängig voneinander von der Dichtungslage abgelöst werden können.

2. Paneel gemäß Anspruch 1, **dadurch gekennzeichnet, dass** der Film die gesamte Dichtungslage bedeckt, die nicht von der zweiten Wärmedichtschicht bedeckt ist.

3. Paneel gemäß einem der Ansprüche 1 bis 2, **dadurch gekennzeichnet, dass** der Schutzabschnitt an einen Rand des Paneels angrenzt.

4. Paneel gemäß Anspruch 3, **dadurch gekennzeichnet, dass** es in der Draufsicht eine rechteckige Form aufweist, wobei der Film vier Schutzabschnitte, die an vier Ränder der Dichtungslage angrenzen, und vier Gratabschnitte, die jeweils an die vier Schutzabschnitte angrenzen, aufweist.

5. Paneel gemäß einem der Ansprüche 1 bis 4, **dadurch gekennzeichnet, dass** der Schutzabschnitt und der Gratabschnitt aus einer einzigen Folie bestehen, die eine Vorstanzung (12) aufweist.

6. Paneel gemäß Anspruch 5, **dadurch gekennzeichnet, dass** es eine Verstärkungsschicht umfasst, die auf den Gratabschnitt aufgelegt ist.

7. Paneel gemäß einem der Ansprüche 1 bis 4, **dadurch gekennzeichnet, dass** der Schutzabschnitt und der Gratabschnitt aus zwei verschiedenen Folien bestehen, die ein unterschiedliches Material und/oder eine unterschiedliche Dicke aufweisen.

8. Paneel gemäß einem der Ansprüche 1 bis 7, **dadurch gekennzeichnet, dass** die Dichtungslage eine nachgiebige Metallfolie umfasst, sowie auf jeder Seite der Metallfolie eine Schicht, die ein Glasfasergewebe aufweist.

9. Paneel gemäß einem der Ansprüche 1 bis 8, **dadurch gekennzeichnet, dass** der Film einen Testabschnitt aufweist, unabhängig von der Schutzschicht und der Gratschicht, von der Dichtungslage abgelöst werden kann.

10. Verfahren zur Herstellung eines dichten und thermisch isolierten Behälters, **dadurch gekennzeichnet, dass** es die Schritte umfasst, bestehend aus:
- Befestigen von Paneelen (1) gemäß einem der Ansprüche 1 bis 9 auf einer Trägerstruktur des Behälters,
- Abziehen der Schutzabschnitte (9) von aneinandergrenzenden Paneelen,
- Aufkleben eines Streifens der Dichtungslage (13) auf die durch die abgezogenen Schutzabschnitte freigelegten Bereiche (10) mittels eines Klebemittels, so dass die Kontinuität der sekundären Dichtungsbarriere gewährleistet ist,
- Abziehen der Gratabschnitte (11), welche an die freigelegten Bereiche angrenzen, nach der Polymerisation des Klebemittels,
- Untersuchen des gebildeten Klebemittelgrats (14) und, abhängig von dieser Untersuchung, Bestätigen der Verklebung des Dichtungslagestreifens.

11. Verfahren zur Herstellung gemäß Anspruch 10, **dadurch gekennzeichnet, dass** der Dichtungslagestreifen eine nachgiebige Metallfolie umfasst, sowie auf jeder Seite der Metallfolie eine Schicht, die eine Glasfasergewebe aufweist.
